# EUROPEAN PATENT APPLICATION

(11) **EP 3 588 838 A1**
(43) Date of publication of application: **01.01.2020**
(21) Application number: 18756820.9
(22) Date of filing: 13.02.2018
(51) Int. Cl.: H04L 9/00

(54) **CHAOTIC MAP-BASED DIGITAL CHAOTIC ENCRYPTION METHOD**

(30) Priority: 24.02.2017 CN 201710101736
(71) Applicant: Chen, Wei, Fuzhou, Fujian 350000 (CN)
(72) Inventor: Chen, Wei, Fuzhou, Fujian 350000 (CN)
(74) Representative: Ipside
(86) International application number: PCT/CN2018/076611
(87) International publication number: WO 2018/153317

(57) **Abstract**

The present invention relates to a chaotic map-based digital chaotic encryption method, the encryption method comprising the following steps: step 1: sending plaintext data to be encoded, and converting the plaintext data into a binary array code; step 2: performing discrete mapping on the binary array code obtained in step 1 to obtain a chaotic code; step 3: performing, by using a key parameter K, fuzzy mapping on the chaotic code obtained in step 2 to obtain a serial code; step 4: constructing ciphertext data by using the serial code obtained in step 3; and step 5: transmitting the ciphertext data obtained in step 4 to a receiving party via a public channel. The encryption method achieves a signal masking function having a spreading code mapping property as well as a parallel data processing function for parallel chaotic mapping. Compared to the conventional encryption system, the encryption method has a better security performance and data processing efficiency, and is more applicable to optical fiber communications.

## Description

### Technical Field

The present invention belongs to the field of information security, and specifically relates to the field of secure communication of computer data, in particular to a chaotic map-based digital chaotic encryption method, which is an encryption method comprising encryption and decryption, key parameter modulation, and message digest extraction.

### Background Art

With the globalization and openness of computer networks, information security is facing a huge threat, which forces encryption techniques to become the core technique for ensuring information security. The encryption technique is a subject that studies how to hide plaintext messages by means of character transformation to ensure implementation of secret communications, and the study object thereof is an information storage. In a encryption system, a plaintext M refers to an unencrypted message; a ciphertext C refers to an encrypted message; and a key K refers to means of character transformation between the plaintext and the ciphertext, wherein the process of transforming a plaintext into a ciphertext is referred to as encryption or encoding E, and the process of transforming a ciphertext into a plaintext is referred to as decryption or decoding E. According to the property of the key, the cryptosystem can be classified into a symmetric cryptosystem and an asymmetric cryptosystem, wherein the former refers to a cryptosystem in which encryption and decryption share one key, and the latter refers to a cryptosystem in which a public key is used for encryption and a private key is used for decryption.

At present, in most of the data encryption methods in the market, data generally needs to be transmitted via a private channel and cannot be transmitted via a public channel. Some encryption methods can be easily cracked by means of statistical or exhaustive methods, with the key being kept unchanged during this process, and the length of the key directly or indirectly affects the speed of encryption and decryption, which cannot adapt to complex computer network environments.

The Chinese patent document of the application No. 201410006219.2 discloses a number form text encryption and decryption method. This encryption method is essentially a connecting type encoding method which realizes "digital-to-analog conversion" by means of encoding of five pairs of dot circles. On the one hand, a decimal number spectrum is used to construct an access control mechanism, which is equivalent to a 0-9 digital keyboard with connecting and dialing functions. On the other hand, a binary number spectrum is used to construct a secure authentication protocol, with five pairs of codes 01 in the binary number spectrum presenting a self-similar fractal structure feature, and this is a chaotic encoding block cipher solution which satisfies a period-3 condition, i.e., having a chaotic encryption function. Since this chaotic encoding method suffers from the technical shortcomings such as the problem of coincident code encoding of five pairs of dot circles and the problem of a limitation to a 10-number key length, it is difficult to adapt to the field of "digital-to-digital conversion" computer data encryption.

### Summary of the invention

In order to solve the above problems, an objective of the present invention is to provide a chaotic map-based digital chaotic encryption method. The encryption method achieves a signal masking function having a spreading code mapping property as well as a parallel data processing function for parallel chaotic mapping. Compared to the conventional encryption system, the encryption method has a better security performance and data processing efficiency, and is more applicable to optical fiber communications.

In order to achieve the objective mentioned above, the following technical solutions are used in the present invention:
a chaotic map-based digital chaotic encryption method, comprising the following steps:
step 1: sending plaintext data to be encoded, and converting the plaintext data into a binary array code;
step 2: performing discrete mapping on the binary array code obtained in step 1 to obtain a chaotic code;
step 3: performing, by using a key parameter K, fuzzy mapping on the chaotic code obtained in step 2 to obtain a serial code;
step 4: constructing ciphertext data by using the serial code obtained in step 3; and
step 5: transmitting the ciphertext data obtained in step 4 to a receiving party via a public channel;
step 6: inversely converting the ciphertext data obtained in step 5 into a serial code; and
step 7: performing chaotic inverse mapping on the serial code obtained in step 6 to obtain a chaotic code,
   wherein the chaotic code has an injective property and a diversified information encoding property, and is implemented according to self-similar indistinguishability of a period-3 period-doubling element; the serial code has a bijective property and a diversified information simulation property, and is implemented according to existence and uniqueness of a single-period element; and chaotic parameter modulation K of the chaotic code and random parameter modulation K of the serial code respectively have a semigroup property and a torus automorphism property.

The chaotic map-based digital chaotic encryption method of claim 1 is characterized in that the discrete mapping is one-to-many forward and random discrete mapping, and contains a self-similar uncertain jumping discrete mapping property; the fuzzy mapping and the chaotic inverse mapping are one-to-one isomorphic mapping, and contain a self-similar indistinguishable fuzzy masking mapping property; and the coupled discrete mapping and chaotic mapping of the fuzzy mapping have a fully homomorphic discrete traversal random oracle injective property and a spreading code mapping property, and the chaotic inverse mapping has a fully homomorphic fuzzy masking black box masking injective property and a topological contractive mapping property, wherein the chaotic mapping constructed by the chaotic code 0000011111 and the serial code 0123456789 has a single-input single-output spreading code mapping property, and the chaotic inverse mapping has a single-input single-output topological contractive mapping property; and the chaotic mapping constructed by the chaotic code 0000011111 and the serial code 0000-1001 has a single-input multiple-output spreading code mapping property, and the chaotic inverse mapping has a multiple-input single-output topological contractive mapping property, wherein an isolation portion 0101010101 in the serial code is essentially a chaotic code, i.e., having an injective property.

The present invention further discloses a chaotic map-based digital chaotic encryption method, the encryption method comprising the following steps:
step 1: sending a plaintext sequence to be encoded, and converting the block plaintext into a binary array code;
step 2: performing discrete mapping on the binary array code obtained in step 1 to obtain a chaotic code;
step 3: performing, by using a round key stream parameter K, fuzzy mapping on the chaotic code obtained in step 2 to obtain a serial code;
step 4: constructing a ciphertext sequence by using the serial code obtained in step 3;
step 5: transmitting the block ciphertext obtained in step 4 to a receiving party via a public channel;
step 6: inversely converting the block ciphertext obtained in step 5 into a serial code; and
step 7: performing chaotic inverse mapping on the serial code obtained in step 6 to obtain a chaotic code,
   wherein the block ciphertext is capable of implementing information disguising with a black box simulation property by using a graft encoding component.

The present invention further discloses a chaotic map-based digital chaotic encryption method, the encryption method comprising the following steps:
step 1: sending a block plaintext to be encoded, and converting the block plaintext into a binary array code;
step 2: performing chaotic inverse mapping on the binary array code obtained in step 1 to obtain a chaotic code;
step 3: performing, by using a single key parameter K or a round key parameter K, cyclically iterative chaotic inverse mapping on the chaotic code obtained in step 2 in a unit of 4 groups to obtain a chaotic code;
step 4: constructing a message digest by using the chaotic code obtained in step 3; and
step 5: transmitting the message digest obtained in step 4 and a message to a receiving party via a public channel.

The present invention further discloses a chaotic map-based digital chaotic encryption method, the encryption method comprising the following steps:
step 1: sending a block plaintext to be encoded, and converting the block plaintext into a binary array code;
step 2: performing discrete mapping on the binary array code obtained in step 1 to obtain a chaotic code;
step 3: performing, by using an open-loop controlled or closed-loop controlled key parameter K, fuzzy mapping on the chaotic code obtained in step 2 to obtain a serial code;
step 4: constructing a block ciphertext by using the serial code obtained in step 3;
step 5: transmitting the block ciphertext obtained in step 4 to a receiving party via a public channel;
step 6: inversely converting the block ciphertext obtained in step 5 into a serial code; and
step 7: performing chaotic inverse mapping on the serial code obtained in step 6 to obtain a chaotic code,
   wherein the key parameter K has a property of a block-by-block single key parameter generated under the drive of a character-by-character key stream parameter; wherein the closed-loop controlled key parameter K is capable of implementing, by using unassociated transfer subkeys K1, K2, K3,..., data-lossless key transfer compression and key escrow and decomposition functions by means of at least three rounds of forward iterative encryption for an encryption key, the transfer subkeys K1, K2 and K3 are constructed by using true random numbers or calculated by means of multiple rounds of inversely iterative Hash function operations using an original key K, and the key transfer compression and key escrow methods can be independently used; and
   wherein the block ciphertext is capable of implementing information disguising with a black box simulation property by using a graft encoding component.

The graft encoding component uses an intermittent audio and segment of a Morse code.

The intermittent audio and segment of the Morse code are specifically as follows: no sound represents nonexistence, i.e., ○ and 0, and a sound represents existence, i.e., ● and 1, and the intermittent audio and segment of the Morse code are designed based on a geometrical theorem that two points of a dot dash line in long and short sounds determine a line, and a line in the graft encoding component represents 2; and a symbol grafting method is as follows: an encoding ciphertext rule is that a 0, 1 graft encoding component is an independent code, and a 2-9 graft encoding component is a grafting code, i.e., characters are randomly grafted by using the same horizontal/vertical/diagonal line.

An encoding key rule of the graft encoding component refers to encoding segment sequence identification and encoding direction arrow identification rules, which specifically follow an identification process of writing a sequence number in front of an arrow head and leaving a space at a connection between arrows.

The key escrow method comprises a key component 1 and a key component 2, the key component 1 referring to a seed key K3 of a user group and a single group of key data of a keyed Hash function, wherein a Hash key is used for key escrow, the seed key K3 is used for key recovery, and further, in order to facilitate the key escrow management of the user group, unified seed key K3 and Hash key are used, i.e., both the seed key and the Hash key are fixed values and are managed by an escrow agency 1; and the key component 2 referring to subkey ciphertexts C1, C2, and C3 generated by means of three rounds of forward iteration encryption using an original key K of a user in transfer subkeys K1, K2, and K3, wherein K1 and K2, and C1, C2, and C3 vary according to variation of the user original key K, i.e., the latter three are all dynamic values and managed by an escrow agency 2.

The present invention further discloses a chaotic map-based digital chaotic encryption method, the encryption method comprising the following steps:
step 1: sending, by a receiving end decryptor, a block plaintext to be encoded, and converting the block plaintext into a binary array code, i.e., a polynomial semi-ciphertext;
step 2: performing discrete mapping on the binary array code obtained in step 1 to obtain a chaotic code;
step 3: performing, by using an open-loop controlled or closed-loop controlled single private key K_{B}, fuzzy mapping on the chaotic code obtained in step 2 to obtain a serial code;
step 4: constructing a block ciphertext, i.e., a polynomial ciphertext, by using the serial code obtained in step 3;
step 5: transmitting the block ciphertext obtained in step 4 to a sending end encryptor of a receiving party via a secret channel;
step 6: sending, by the sending end encryptor, a block plaintext to be encoded, and converting the block plaintext into a binary array code;
step 7: performing discrete mapping on the binary array code obtained in step 6 to obtain a chaotic code;
step 8: performing, by using a public round key K_{A}, fuzzy mapping on the chaotic code obtained in step 7 to obtain a serial code;
step 9: constructing a block ciphertext by using the serial code obtained in step 8;
step 10: transmitting the block ciphertext obtained in step 9 to a receiving end decryptor of the receiving party via a public channel;
step 11: inversely converting the block ciphertext obtained in step 10 into a serial code; and
step 12: performing chaotic inverse mapping on the serial code obtained in step 11 to obtain a chaotic code.

The present invention further discloses a chaotic map-based digital chaotic encryption method, the encryption method comprising the following steps:
step 1: sending a block plaintext to be encoded, i.e., watermark data, and converting the block plaintext into a binary array code;
step 2: performing discrete mapping on the binary array code obtained in step 1 to obtain a chaotic code;
step 3: performing, by using a closed-loop controlled key stream parameter K, fuzzy mapping on the chaotic code obtained in step 2 to obtain a serial code;
step 4: constructing host data loaded with a watermark by using the serial code obtained in step 3;
step 5: solidifying the host data loaded with the watermark obtained in step 4 into a digital work;
step 6: inversely converting the host data loaded with the watermark obtained in step 5 into a serial code; and
step 7: performing chaotic inverse mapping on the serial code obtained in step 6 to obtain a chaotic code.

The present invention has the following beneficial effects:
1. The present invention solves the problem of coincident code encoding in the prior art, and has intrinsic mixing properties of realizing an aliasing effect of discrete mapping and collapse mapping of continuous 01 input signals between homoclinic orbits of level 0 and level 1, and realizing output signals between hetroclinic orbits thereof. In a chaotic mapping process of a technical solution of a nonlinear circuit, the present invention has an intrinsic mixing property of realizing an aliasing effect of continuous 01 input signals, to generate decimal output signals in aliasing and mixing interleaving states.
2. The present invention solves the problem of a limitation to a 10-number key length in the prior art, realizes mapping parameter universality of diversified information encoding of a chaotic code in a nonlinear space segment and diversified information simulation of a serial code in a linear space segment of digital chaotic encryption. In addition, the encryption and decryption speeds of the present invention are unrelated to a key length and key period of a key system, and a key space can tend to be infinite.
3. Compared with a number theory cryptosystem of the modern cryptography, a mathematical encryption algorithm based on a fixed operation rule realizes one-time-pad encryption by completely depending on a parameter variable of a key system, is a cryptosystem that realizes associated discrete encryption based on a parameter variable. The discrete semi-dynamic of self-similar discrete mapping in the nonlinear space segment of the digital chaotic encryption has a feature of one-time-ciphertext output that realizes single key encryption, and is a cryptosystem that realizes unassociated discrete encryption based on a state variable and parameter variable. In addition, chaotic logic calculation of the present invention overcomes a technical defect in a generating pseudo-random number of a linear feedback shift register (LFSR) in the prior art of mathematical arithmetic calculation, and a technical defect f a semi-homomorphic collision compression rule of the modern Hash functions MD5 and SHA-1.
4. The digital chaotic cryptosystem achieves a signal masking function having a spreading code mapping property and a parallel data processing function of parallel chaotic mapping, has better security performance and data processing efficiency than the modern cryptosystem, and is more applicable to optical fiber communications. In a word, the intrinsic randomness and intrinsic masking encryption properties of this method improve an encryption defect of linear encryption that a random number needs to be added to realize external disturbance randomness and external disturbance masking.

### Brief Description of the Drawings

FIG. 1 is a schematic diagram of an overall conception model of the present invention;
FIG. 2 is a schematic diagram of a first embodiment of the present invention;
FIG. 3 is a schematic diagram of a second embodiment of the present invention;
FIG. 4 is a schematic diagram of a third embodiment of the present invention;
FIG. 5 is a schematic diagram of a fourth embodiment of the present invention;
FIGs. 6, 7a, and 7b are schematic diagrams of a fifth embodiment of the present invention;
FIG. 8 is a schematic diagram of a method for implementing graft encoding of a block ciphertext in the present invention;
FIG. 9 is a schematic diagram of a key escrow method of the present invention;
FIG. 10 is a schematic structural diagram of a model of asymmetrical digital chaotic public key encryption of the present invention; and
FIG. 11 is a schematic structural diagram of a model of a digital chaotic watermark system of the present invention.

### Detailed Description of Embodiments

The present invention will be further described below in detail in combination with specific embodiments.

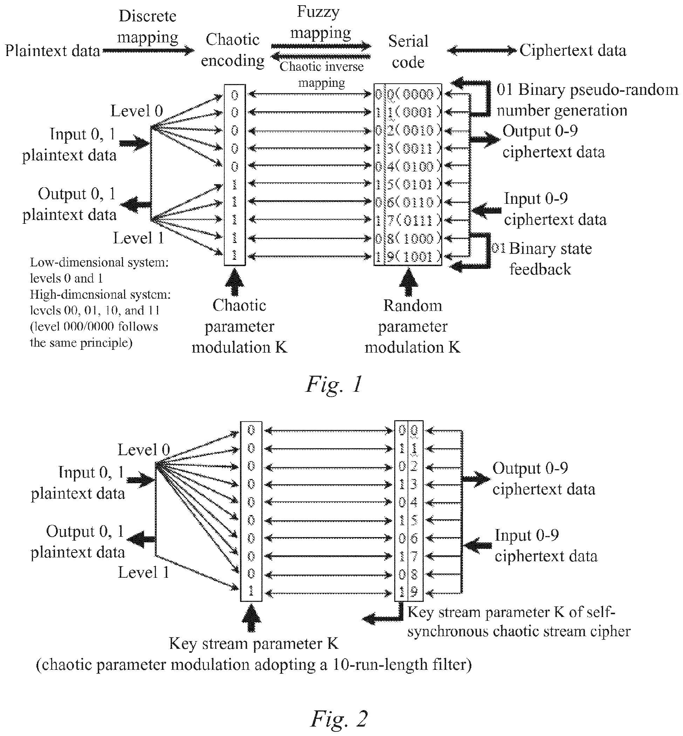

Referring to FIG. 1, which is a schematic diagram of an overall conception model of the present invention. The overall process steps of the encryption method are as follows: plaintext data is converted into a chaotic code by means of discrete mapping, the chaotic code is converted into a serial code by means of fuzzy mapping using a key parameter K, and then ciphertext data are constructed by using the serial code. The ciphertext data can further be inversely converted into the serial code, which is then converted into the plaintext data of the chaotic code by means of chaotic inverse mapping using the corresponding key parameter K.

Embodiment 1: Referring to FIG. 2, a chaotic map-based digital chaotic encryption method comprises the following steps and specific implementations:
step 1: sending a plaintext sequence to be encoded, and converting the plaintext sequence into a binary array code 0, 1;
step 2: performing discrete mapping on the binary array code 0, 1 obtained in step 1 to obtain a chaotic code 0000000001;
step 3: performing fuzzy mapping on the chaotic code 0000000001 obtained in step 2 by using a key stream parameter K to obtain a serial code 0123456789;
step 4: constructing a ciphertext sequence by using the serial code 0123456789 obtained in step 3;
step 5: transmitting the ciphertext sequence obtained in step 4 to a receiving party via a public channel;
step 6: inversely converting the ciphertext sequence obtained in step 5 into the serial code 0-9; and
step 7: performing chaotic inverse mapping on the serial code 0-9 obtained in step 6 to obtain the chaotic code 0, 1.

Specific implementation: as illustrated in FIG. 2, the method of the present embodiment is to solve a continuous aperiodic dynamic problem of the key stream parameter K, is applicable to a synchronous communication solution in a real-time encryption case, and has substantially same secure communication function and application field as modern sequence encryption. a. Parameter modulation manner: the key stream parameter K adopts a chaotic parameter modulation standard of an n-run-length filter. For example, in this embodiment, in a case of a 10-number key length, a 10-run-length filter is used for modulation. For the one-time-pad continuous aperiodic key stream parameter K, the 10-run-length filter plays a role of limiting a 0, 1 continuous run length to be within 10 numbers. Specifically, an exclusive-or operation is performed on the 10-th number bit 0, 1 of the 0, 1 continuous run length with 1, for example, 0⊕1=1 and 1⊕1=0, to change a driving signal property thereof, so as to ensure that level 0 and level 1 of the model have a mapping channel effect of at least one nonlinear bifurcated orbit. b. Information processing manner: character-by-character serial data processing is adopted, wherein encryption or decryption of 1 bit (1 number) of a message character is processed in each switch of 1 bit of a key character k in the key stream parameter K. c. Application design: the concept of this design is consistent with that of the modern sequence encryption. Since generation of the key stream parameter K depends on an independent key stream generator or participation of a message flow, the design is applicable to construction of synchronous chaotic sequence ciphers and self-synchronous chaotic sequence ciphers. In the implementation of the self-synchronous chaotic sequence cipher, a serial code of a dual-structure mapping parameter is adopted.

The chaotic code has an injective property and a diversified information encoding property, and is implemented according to self-similar indistinguishability of a period-3 period-doubling element. The serial code has a bijective property and a diversified information simulation property, and is implemented according to existence and uniqueness of a single-period element. Chaotic parameter modulation K of the chaotic code and random parameter modulation K of the serial code respectively have a semigroup property and a torus automorphism property.

The discrete mapping is one-to-many forward and random discrete mapping, and contains a self-similar uncertain jumping discrete mapping property; the fuzzy mapping and the chaotic inverse mapping are one-to-one isomorphic mapping, and contain a self-similar indistinguishable fuzzy masking mapping property; and the coupled discrete mapping and chaotic mapping of the fuzzy mapping have a fully homomorphic discrete traversal random oracle injective property and a spreading code mapping property, and the chaotic inverse mapping has a fully homomorphic fuzzy masking black box masking injective property and a topological contractive mapping property, wherein the chaotic mapping constructed by the chaotic code 0000011111 and the serial code 0123456789 has a single-input single-output spreading code mapping property, and the chaotic inverse mapping has a single-input single-output topological contractive mapping property; and the chaotic mapping constructed by the chaotic code 0000011111 and the serial code 0000-1001 has a single-input multiple-output spreading code mapping property, and the chaotic inverse mapping has a multiple-input single-output topological contractive mapping property, wherein an isolation portion 0101010101 in the serial code is essentially a chaotic code, i.e., having an injective property.

### Embodiment 2:

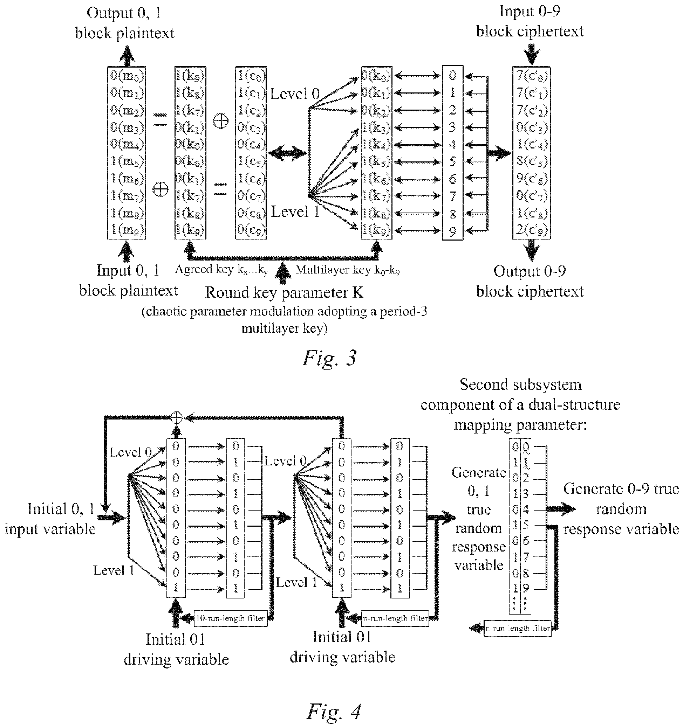

Referring to FIG. 3, a chaotic map-based digital chaotic encryption method comprises the following steps and specific embodiments:
step 1: transmitting a block plaintext to be encoded, and converting the block plaintext into a binary array code 0, 1;
step 2: performing discrete mapping on the binary array code 0, 1 obtained in step 1 to obtain a chaotic code 0001111111;
step 3: performing fuzzy mapping on the chaotic code 0001111111 obtained in step 2 by using a round key parameter K to obtain a serial code 0123456789;
step 4: constructing a block ciphertext by using the serial code 0123456789 obtained in step 3;
step 5: transmitting the block ciphertext obtained in step 4 to a receiving party via a public channel;
step 6: inversely converting the block ciphertext obtained in step 5 into the serial code 0-9; and
step 7: performing chaotic inverse mapping on the serial code 0-9 obtained in step 6 to obtain the chaotic code 0, 1.

Specific implementation: As illustrated in FIG. 3, the method of the present embodiment is to solve a short period effect problem of the round key parameter K and a limited precision problem of the single key parameter k, is applicable to an asynchronous communication solution in a static encryption case, and has substantially same secure communication function and application field as modern block encryption. a. Parameter modulation manner: a single key parameter k modulation standard that satisfies period-3 multilayer key is adopted. For example, in this embodiment, in a case of a 10-number key length, a chaotic parameter consisting of three 0 and seven 1 or seven 0 and three 1, four 0 and six 1 or six 0 and four 1, or five 0 and five 1 is used for modulation, such that both the level 0 and level 1 of the model satisfy a mapping channel of at least three nonlinear bifurcated orbits. Since the round key parameter K consists of a limited number of single key parameters k, thus it is a dynamic parameter of a mixed period-3 multilayer key. The dynamic parameter refers to a period-3 multilayer key, for example, a number consisting of three 0 and seven 1 which are randomly arranged and combined. b. Information processing manner: a head and tail of the round key parameter K are connected to each other to form a periodically and cyclically driven 0-type limit cycle. Block-by-block parallel data processing is adopted, wherein encryption or decryption of 10 bits (10 numbers) of a block message is processed in each switch of 10 bits of single key parameters k, for example, this embodiment adopts a parallel chaotic mapping process of matrix input c0-c9→matrix output c'0-c'9 in k0-k9. c. Security design: in order to solve the limited precision problem of the single key parameter k, first-stage pre-encryption is adopted to hide a key parameter of a plaintext-ciphertext pair. Specifically, an input 0, 1 block plaintext adopts different pieces of key data of the same single key parameter k0-k9. For example, an agreed key {k9k8k7k1k0k0k1k7k8k9} in the model is adopted to realize a first-stage parallel exclusive-or operation of matrix input m0-m9→matrix output c0∼c9, so as to prevent a selective plaintext attack of key parameter identification. In order to solve the short period effect problem of the round key parameter K, length-unfixed message blocking is adopted to hide a key period of the round key parameter K in ciphertext data C. Specifically, irregular cyclic blocks of several groups of length-unfixed 0, 1 block plaintexts such as, 6 bit... 8 bit... 7 bit are randomly added to prevent an exhaustive attack of regular message blocking, and a block length of a message block is indicated in the corresponding single key parameter k, for example, in k01=0001111111(6), 6 represents that a message block length of a single key parameter k01 is 6 bits.

### Embodiment 3:

Referring to FIG. 4, a chaotic map-based digital chaotic encryption method comprises the following steps and specific embodiments:
step 1: sending a plaintext sequence to be encoded, and converting the plaintext sequence into a binary array code 0, 1;
step 2: sequentially performing first-stage discrete mapping on the binary array code 0, 1 obtained in step 1 to obtain a first-stage chaotic code 0000000001, and then performing fuzzy mapping by using a driving variable of an n (10)-run-length filter to obtain a first-stage serial code 0101010101;
step 3: performing second-stage discrete mapping on the serial code 0101010101 obtained in step 2 to obtain a second-stage chaotic code 0000000001, and then performing fuzzy mapping by using a driving variable of an n (10)-run-length filter to obtain a second-stage serial code 0101010101, wherein the second-stage serial code can generate a 0123456789 response variable by adopting a second subsystem component of a dual-structure mapping parameter;
step 4: constructing a true random number by using the second-stage serial code 0101010101 or 0123456789 obtained in step 3; and
step 5: using the truly random number obtained in step 4 as a key K modulation parameter.

Specific implementation: as illustrated in FIG. 4, the method of this embodiment aims at solving the problem of period chaotic degradation and achieving continuous and stable self-maintaining chaotic dynamic, has a substantially same application field as a linear feedback shift register (LFSR), and further solves a technical defect in generation of a pseudo-random number. a. Design principle: the parameter modulation manner and information processing manner in embodiment 1 are adopted. Feedback control of a state variable is adopted to realize the self-maintaining chaotic dynamic, which refers to a principle of introducing a response variable generated by a response system into a driving system as a driving variable, and introducing the response variable into an input system as an input variable to realize a synergistic effect of the state variable on a parameter variable. b. Design concept: dual-system control of a state variable is adopted, which refers to use of a dual-system to control discrete semi-dynamic of a nonlinear space segment of a digital chaotic system, so as to realize continuous and stable self-maintaining chaotic dynamic. Specifically, a first-stage subsystem and a second-stage subsystem in the model respectively adopt independent pulse disturbance solutions, and an exclusive-or operation is performed between driving variables of the two stages of subsystems in state feedback to synthesize new dynamic, which serves as an input variable of the first-stage subsystem. Design purpose: on the one hand, the dual-system control can achieve that any stage of subsystem is kept in a discrete state of a continuous aperiodic motion, and a finally generated response variable is a one-time-pad true random sequence; and on the other hand, an exclusive-or operation variable can solve the continuous chaotic dynamic problem that the two stages of subsystems enter a degraded state at the same time. c. Extension design and application: the response variable generated by the model is a 0, 1 random number. If the second-stage subsystem adopts a second-stage subsystem component of the dual-structure mapping parameter, the generated response variable is a 0-9 random number. Specifically, when the dual-structure mapping parameter of this component is used, on the one hand, a binary mapping parameter 010101... is responsible for feedback control of the state variable in the second-stage subsystem, so as to realize the self-maintaining chaotic dynamic. On the other hand, a decimal mapping parameter 012345... or 012012... is responsible for generating a true random response variable. In this component, when the mapping parameter is greater than or less than 10 numbers, a key length and an n-run-length filter of the second-stage subsystem need to be adjusted accordingly. This product or circuit is applicable to parameter dynamic systems of a serial code and a chaotic mixer. Regarding the application field, the decimal mapping parameter of the component is replaced by other symbolic elements or mixing elements, for example, mixing entities in aspects such as physics, chemistry, biology, and medicine. The mixing elements are fully mixed and finely mixed by means of digital chaotic dynamic and corresponding equipment, realizing construction of a chaotic object having an aliasing and mixed structure and having a special practical use, for example, smelting of an aluminum alloy.

### Embodiment 4:

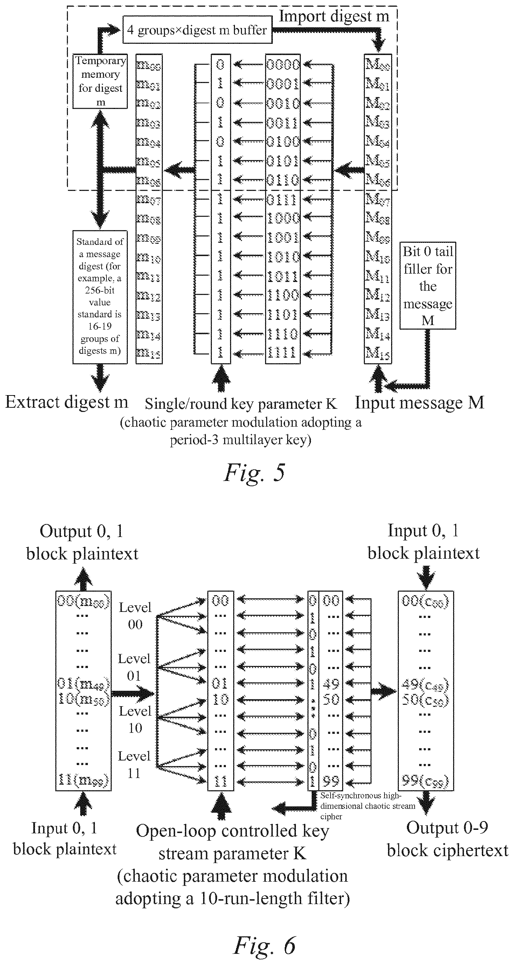

Referring to FIG. 5, a chaotic map-based digital chaotic encryption method comprises the following steps and specific embodiments:
step 1: sending a block plaintext to be encoded, and converting the block plaintext into a binary array code 0000-1111;
step 2: performing chaotic inverse mapping on the binary array code 0000-1111 obtained in step 1 to obtain a chaotic code 0, 1;
step 3: performing cyclically iterative chaotic inverse mapping on the chaotic code 0, 1 obtained in step 2 by using a single key parameter K or a round key parameter K at a unit of 4 groups to obtain a chaotic code 0, 1;
step 4: constructing a message digest by using the chaotic code 0, 1 obtained in step 3; and
step 5: transmitting the message digest obtained in step 4 and a message to a receiving party via a public channel.

Specific implementation: as illustrated in FIG. 5, a principle of the method of this embodiment for realizing digest extraction of message data M is as follows: multiple rounds of inverse iterations are performed by means of a 4:1 topological compression property of the chaotic inverse mapping in FIG. 1, so as to realize parallel data compression processing of one-way irreversible and 4-time multiple-level diminishing rules. The method has substantially same lossy data compression function and application field as a modern Hash function, and solves a technical defect of a semi-homomorphic collision compression rule problem in MD5 and SHA-1. a. Parameter modulation manner: the single key parameter K modulation standard and the round key parameter K modulation method in embodiment 2 are adopted, and a difference lies in: this model uses a 16-number key length, i.e., a chaotic parameter consisting of three 0 and thirteen 1 or thirteen 0 and three 1,..., or eight 0 and eight 1 is used for modulation. b. Information processing manner: block-by-block parallel data compression processing at a unit of a 64-bit block message is adopted, for example, a parallel chaotic inverse mapping process of matrix input M00-M15→matrix output m00-m15 in k00-k15 of this embodiment is divided into two process steps. In step 1, an input message M is imported into a message M data frame at a unit of a 64-bit block message, wherein when bits of the data are less than 64 bits, a filler automatically adds 0 for supplementation, and multiple groups of digests m which are output after one-time continuous compression processing are stored in a temporary storage. In step 2, the digests m in the temporary storage are imported into the message M data frame at a unit of 4 groups ×digest m, i.e., a 64-bit block message, for continuous cyclic compression processing, and the single value output digest m is re-stored in the temporary storage, until a data amount of the digests m in the storage is compressed to an amount satisfying a message digest extraction standard, for example, a fixed value of a message digest 256-bit standard defines a range of 16-19 groups of digests m. Finally, the message digest m is extracted. c. Application design: the design concept of this chaotic Hash function is basically the same as that of the modern Hash function, and the chaotic Hash function is classified into keyless and keyed chaotic Hash functions according to key data which uses a fixed value of the single key parameter k or a dynamic value of the round key parameter K. In an information processing manner of the keyed chaotic Hash function, a head and tail of the round key parameter K are connected to each other to form a periodically and cyclically driven 0-type limit cycle, and parallel data compression processing is adopted, wherein 64 bits of a block message are processed in each switch of 16 bits of a single key parameter k.

### Embodiment 5:

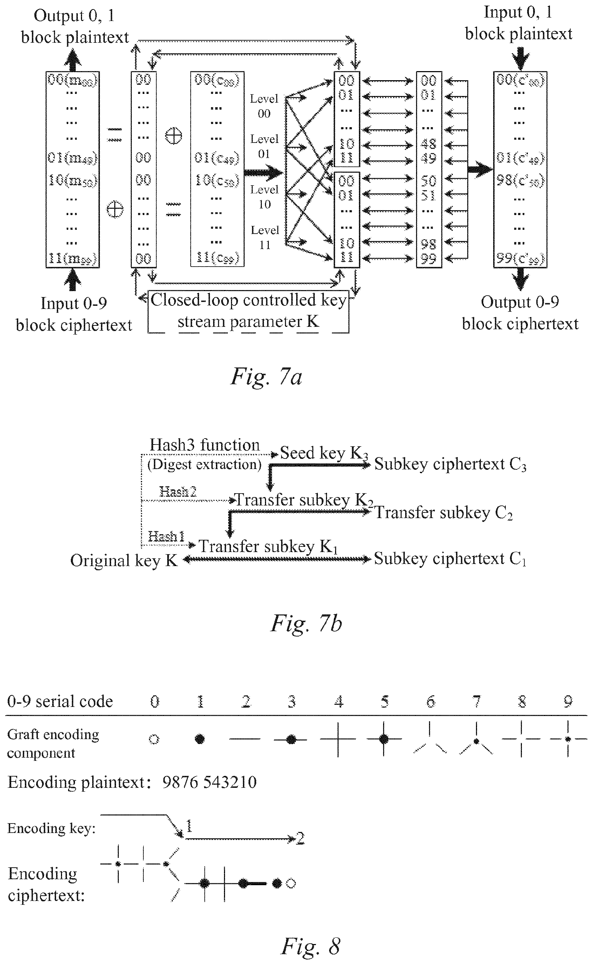

Referring to FIGs. 6 and 7, a chaotic map-based digital chaotic encryption method comprises the following steps and embodiments:
step 1: sending a block plaintext to be encoded, and converting the block plaintext into a binary array code 00, 01, 10, 11, wherein the high-dimensional system has a 100-number key length, i.e., the length of the block plaintext is 200 bits;
step 2: performing discrete mapping on the binary array code 00, 01, 10, 11 obtained in step 1 to obtain a chaotic code 00, 01, 10, 11;
step 3: performing fuzzy mapping on the chaotic code 00, 01, 10, 11 obtained in step 2 by using an open-loop controlled or closed-loop controlled key parameter K to obtain a serial code 00-99;
step 4: constructing a block ciphertext by using the serial code 00-99 obtained in step 3;
step 5: transmitting the block ciphertext obtained in step 4 to a receiving party via a public channel;
step 6: inversely converting the block ciphertext obtained in step 5 into the serial code 00-99; and
step 7: performing chaotic inverse mapping on the serial code 00-99 obtained in step 6 to obtain the chaotic code 00, 01, 10, 11.

Specific implementation: as illustrated in FIGs. 6 and 7, the key parameter K in the method of this embodiment is classified into open-loop controlled and closed-loop controlled model designs. Firstly, the open-loop controlled model design is equivalent to the chaotic sequence cipher design in embodiment 1, is applicable to a synchronous communication solution in a real-time encryption case, and mainly solves a real-time communication problem in realizing dynamic encryption of parallel data by means of a polynomial sequence, for example, multimedia data encryption of a digital image and an effective video frame. Secondly, the closed-loop controlled model design is equivalent to the chaotic block cipher design in embodiment 2, is applicable to an asynchronous communication solution in a static encryption case, and mainly solves an asynchronous communication problem in realizing static encryption of parallel data by means of a polynomial sequence, for example, big data text encryption. Regarding the two cases, a. parameter modulation manner: in this embodiment, character-by-character key stream parameter driving is adopted, having a feature of generating a block-by-block single key parameter k00-k99, and the key stream parameter K adopts a chaotic parameter modulation standard of a 10-run-length filter. b. Information processing manner: block-by-block parallel data processing is adopted, wherein encryption or decryption of 200 bits (200 numbers) of a block message is processed in each switch of 1 bit of a key character k in the key stream parameter K, for example, the embodiment of FIG. 6 adopts a parallel chaotic mapping process of matrix input m00-m99→matrix output c00-c99 in k00-k99, which is also applicable to FIG. 7. In an encryption process of the 0, 1 block plaintext, for the closed-loop controlled key stream parameter K shown in FIG. 7a, the continuously driven single key parameter k00-k99 is used for a first-stage parallel exclusive-or operation, and the discontinuously driven single key parameter k00-k99 is used for second-stage parallel chaotic mapping. Decryption of the 0-9 block ciphertext is performed in a similar way with an opposite order. The closed-loop controlled key stream parameter K shown in FIG. 7a is capable of realizing data-lossless key transfer compression and key escrow functions by means of at least three rounds of forward iterative encryption for an encryption key using unassociated transfer subkeys K1, K2, K3,... shown in FIG. 7b. the transfer subkeys K1, K2 and K3 are constructed by using true random numbers or calculated by means of multiple rounds of inversely iterative Hash function operations using an original key K, and The key transfer compression and key escrow methods can be independently used.

Preferably, the 0-9 block ciphertext obtained in step 4 of either embodiment 2 or embodiment 5 can realize an information disguising function with a black box simulation property by adopting a graft encoding component. Specific implementation: as illustrated in FIG. 8, the method of this embodiment is to realize artwork information simulation and disguising for constructing ciphertext data and a black box simulation authentication method for constructing a nonlinear authentication code in FIGs. 3 and 7a by using the graft encoding component as an information carrier and using a symbol grafting function thereof. This embodiment and the number form text patent belong to the same general invention concept. The graft encoding component is designed according to intermittent audio and segment rules of a Morse code, which specifically are as follows: no sound represents nonexistence, i.e., ○ and 0, and a sound represents existence, i.e., ● and 1, and based on a geometrical theorem that two points of a dot dash line in long and short sounds determine a line. For example, in a 2-9 graft encoding component, a dot represents 1 and a line represents 2. a. Symbol grafting method: an encoding ciphertext rule is that a 0, 1 graft encoding component is an independent code, and a 2-9 graft encoding component is a grafting code, i.e., characters are randomly grafted by using the same horizontal/vertical/diagonal line; and an encoding key rule refers to encoding segment sequence identification and encoding direction arrow identification rules, which specifically follow an identification process of writing a sequence number in front of an arrow head and leaving a space at a connection between arrows. b. Application design: this design concept belongs to the fields of information hiding and secret sharing. Authentication information and secret information can be hided in artwork decorations by means of planar or stereoscopic encoding.

Preferably, a key escrow solution design based on a key compression protocol is as follows. The key compression protocol is substantively a threshold secret sharing solution capable of inversely restoring data. In a key compression protocol design, key compression is an encryption process implemented by means of multiple rounds of key transfer, that is, multiple rounds of decomposition of an upper-stage key into a lower-stage key and a corresponding subkey ciphertext, i.e., two key components. On the contrary, key decompression is a decryption process of restoring an upper-stage key by means of multiple rounds of data reconstruction, that is, multiple rounds of data reconstruction using a lower-stage key and a corresponding key ciphertext, i.e., two key components. Further, the key compression protocol is also applicable to construction of a stepped key escrow solution.

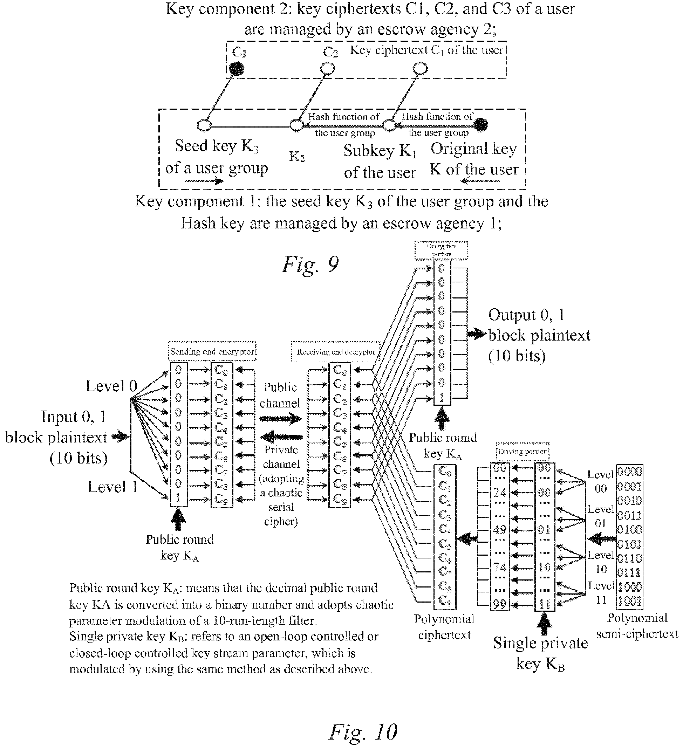

FIG. 9 is a schematic diagram of a key escrow method, which is specifically a schematic diagram of constructing a key escrow design with reference to key compression protocols having and not having a digital signature. This design solution comprises a key component 1 and a key component 2. The key component 1 referring to a seed key K3 of a user group and a single group of key data of a keyed Hash function, wherein a Hash key is used for key escrow, the seed key K3 is used for key recovery, and further, in order to facilitate key escrow management of the user group, unified seed key K3 and Hash key are adopted, i.e., both the seed key K3 and the Hash key are fixed values and are managed by an escrow agency 1. the key component 2 referring to subkey ciphertexts C1, C2, and C3 generated by means of three rounds of forward iteration encryption using an original key K of a user in transfer subkeys K1, K2, and K3, wherein K1 and K2, and C1, C2, and C3 vary according to variation of the user original key K, i.e., the latter three are all dynamic values and managed by an escrow agency 2. In the aspect of key escrow of the protocol activity, an authentication agency extracts, by using the Hash key of the user group, message digests of different digest length standards from the original key K of the user as the transfer subkeys K1 and K2, encrypts K with K1 to generate C1, encrypts K1 with K2 to generate C2, and encrypts K2 with the unified seed key K3 of the user group to generate C3. In network communication, the subkey ciphertext C3 is used as a data recovery field (DRF), and the user is enabled to transfer the DRF, i.e., C3, at the same time when transmitting the ciphertext data in secret communication. Further, in the aspect of data recovery, a legitimate agency accesses the escrow key, i.e., the unified seed key K3 of the user group, according to appropriate legal authorization, and decrypts C3 with the seed key K3 to restore K2, decrypts C2 with K2 to restore K1, and decrypts C1 with K1 to restore the original key K of the user by means of opposite methods, thereby realizing forced decryption of the ciphertext data transmitted by the user. To sum up, in the key escrow solution design with a stepped structure, key escrow is an encryption process of performing three rounds of forward iteration on an encryption key, i.e., a left arrow in the drawing, while data recovery is a decryption process of performing three rounds of inverse iteration on an encryption key, i.e., a right arrow in the drawing, and the authentication agency solves the key escrow and data recovery problems by means of the Hash key of the user group and the seed key K3, thereby facilitating fixed storing and change recording of escrow of the original key K of the user, i.e., big data key, in the field of big data communication. In conclusion, the key escrow function and the data recovery function of key management and control in the big data communication field are realized by using the subkey ciphertext C3 in FIG. 9 as a data recovery field (DRF) or a legal mandatory access field of back door recovery, and using the unified seed key K3 of the user group as a data recovery key KEC or a unit key of an escrow encryption chip.

FIG. 10 illustrates asymmetrical digital chaotic public key cryptography. A design core of this model lies in a design of a driving portion for solving a distributed state numerical disturbance of polynomial semi-ciphertexts 0000-1001, such that a unique linear space remains between generated polynomial ciphertexts C0-C9. This model is a mixed compound dual-dynamical system for constructing a chaotic secure communication solution having a multi-variable linear approximation encryption function by means of interactive communication in which the polynomial ciphertexts C0-C9 are used as carrier signals, and is applicable to application fields such as a key agreement protocol, a digital signature, and digital encryption which are basically the same as those of RSA. One of the main advantages of this solution in comparison with RSA is that the public round key KA and the single private key KB have a key pair property of independent random pairing. A specific implementation solution comprises: a. driving system design: the driving portion is a key pair generator constructed by using a high-dimensional chaotic key. Taking the open-loop controlled single private key KB as an example, an information processing manner is as follows: the polynomial semi-ciphertexts are encrypted at two batches in each switch of 1 bit of a key character. For example, tetrads 0000-1001 are divided into two-tuples 00-10 and 00-01, to realize block-by-block parallel data processing of the two batches, thereby generating the polynomial ciphertexts C0-C9. The decryption is performed in a similar way with an opposite order. b. Response system design: the public round key KA of the sending end encryptor and the receiving end decryptor uses a decimal key, which has functions of identity authentication and data encryption. During the data encryption or decryption, a numerical system conversion is performed to convert the decimal public round key KA into a binary number of which a head and tail thereof are connected to each other to form a periodically and cyclically driven 0-type limit cycle, and a 10-run-length filter is used for modulation. An information processing manner refers to an encryption and decryption method in which 1 bit (1 number) of a message character is processed in each switch of 1 bit of the key character KA and a switch to use of a group of polynomial ciphertexts C0-C9 is performed each time when processing of 10 bits (10 numbers) of a block message is completed, so as to achieve character-by-character serial data processing. c. Process steps of linear transformation encryption and decryption: the basic idea of the process steps is the same as that of RSA key generation, encryption algorithm, and decryption algorithm. The steps comprise: step 1: the driving portion drives the single private key KB to generate the polynomial ciphertexts C0-C9 group by group, and the ciphertext is sent to the sending end encryptor via a private channel; step 2: the sending end encryptor encrypts plaintext data M by using the received polynomial ciphertexts C0-C9 and the known public round key KA, and transmits the generated ciphertext data C to the decryption portion of the receiving end decryptor via the public channel; and step 3: the decryption portion decrypts the ciphertext data C according to two implementation solutions, one is realizing decryption by using a dynamically updated lookup table of the polynomial ciphertexts C0-C9 in cooperation with the public round key KA, and the other one is realizing decryption by using the closed-loop controlled single private key KB in cooperation with the public round key KA. The specific embodiment is as follows:
a chaotic map-based digital chaotic encryption method, comprising the following steps:
step 1: sending, by a receiving end decryptor, a block plaintext to be encoded, and converting the block plaintext into a binary array code, i.e., a polynomial semi-ciphertext;
step 2: performing discrete mapping on the binary array code obtained in step 1 to obtain a chaotic code;
step 3: performing, by using an open-loop controlled or closed-loop controlled single private key K_{B}, fuzzy mapping on the chaotic code obtained in step 2 to obtain a serial code;
step 4: constructing a block ciphertext, i.e., a polynomial ciphertext, by using the serial code obtained in step 3;
step 5: transmitting the block ciphertext obtained in step 4 to a sending end encryptor of a receiving party via a secret channel;
step 6: sending, by the sending end encryptor, a block plaintext to be encoded, and converting the block plaintext into a binary array code;
step 7: performing discrete mapping on the binary array code obtained in step 6 to obtain a chaotic code;
step 8: performing, by using a public round key K_{A}, fuzzy mapping on the chaotic code obtained in step 7 to obtain a serial code;
step 9: constructing a block ciphertext by using the serial code obtained in step 8;
step 10: transmitting the block ciphertext obtained in step 9 to a receiving end decryptor of the receiving party via a public channel;
step 11: inversely converting the block ciphertext obtained in step 10 into a serial code; and
step 12: performing chaotic inverse mapping on the serial code obtained in step 11 to obtain a chaotic code.

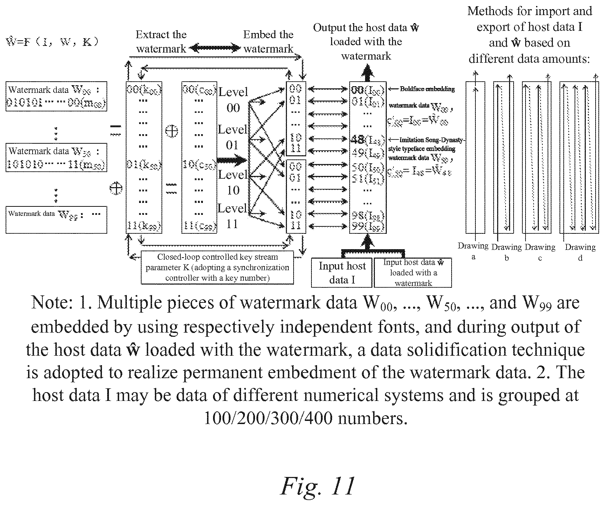

FIG. 11 illustrates a digital chaotic watermark system of the present invention. A design core of this model is a digital watermark protocol method in which chaotic traversing dynamic of a closed-loop high-dimensional chaotic cipher is used as a steganographic tool for enabling single or multiple pieces of watermark data W00, ..., W50, ..., and W99 to realize inner traverse and to be embedded into host data I. This model is an internal disturbance embedding algorithm that realizes loading of watermark information in a manner of changing identifiers such as a font, has imperceptibility of not affecting quality and availability of the host data I, mainly solves the implementation problem of digital information that adopts a bit watermark embedding mode, and is applicable to application fields such as copyright protection and piracy tracking of multimedia digital works. A specific implementation solution thereof comprises: a. model design: a key driving system is designed by adopting a key number synchronous controller of a C-type limit cycle; and a watermark embedding system is designed by adopting data import and export modes of a block message, for example, a lower left import manner and an upper right export manner shown in drawing a/b/c/d. b. Information processing manner: it strictly follows a synchronous driving relationship between character-by-character driving of the key driving system and block-by-block driving of the watermark embedding system. A first-stage parallel exclusive-or operation is performed on watermark data W at a unit of a 2-bit data segment in each switch of 1 bit of a key character k and 100/200/300/400 bits (numbers) of block messages 100-199, and second-stage parallel chaotic mapping is performed to traverse and embed the watermark data W into host data 100-199, so as to generate host data ŵ loaded with a watermark. Contrarily, watermark extraction is opposite to the watermark embedding process. For example, a parallel exclusive-or operation is implemented between m00 of watermark data W00 and k00 of a single key parameter k1 to generate c00, and unidirectional discrete mapping is performed on c00 by using a single key parameter k2 to embed a boldface into host data I00=c'00. Watermark data W2 is processed in a similar way, a difference lying in a font embedding means. c. Application design: this solution can adopt parallel digital watermark embedding of single watermark data W or multiple pieces of watermark data W00, ..., W50, ..., and W99. For a digital work with a relatively small information amount, chaotic block encryption is adopted to realize construction of a digital chaotic watermark system of a principle the same as described above. The specific embodiment is as follows:
a chaotic map-based digital chaotic encryption method, comprising the following steps:
step 1: sending a block plaintext to be encoded, i.e., watermark data, and converting the block plaintext into a binary array code;
step 2: performing discrete mapping on the binary array code obtained in step 1 to obtain a chaotic code;
step 3: performing, by using a closed-loop controlled key stream parameter K, fuzzy mapping on the chaotic code obtained in step 2 to obtain a serial code;
step 4: constructing host data loaded with a watermark by using the serial code obtained in step 3;
step 5: solidifying the host data loaded with the watermark obtained in step 4 into a digital work;
step 6: inversely converting the host data loaded with the watermark obtained in step 5 into a serial code; and
step 7: performing chaotic inverse mapping on the serial code obtained in step 6 to obtain a chaotic code.

The description above merely relates to the specific implementations of the present invention, and is not intended to limit the patent scope of the present invention. Any equivalent structure transformation made by using the contents of the description and drawings of the present invention, or any direct or indirect application of the contents of the description and drawings of the present invention in other related technical fields, is equally included in the patent protection scope of the present invention.

## Claims

1. A chaotic map-based digital chaotic encryption method, **characterized by** comprising the following steps:
step 1: sending plaintext data to be encoded, and converting the plaintext data into a binary array code;
step 2: performing discrete mapping on the binary array code obtained in step 1 to obtain a chaotic code;
step 3: performing, by using a key parameter K, fuzzy mapping on the chaotic code obtained in step 2 to obtain a serial code;
step 4: constructing ciphertext data by using the serial code obtained in step 3; and
step 5: transmitting the ciphertext data obtained in step 4 to a receiving party via a public channel;
step 6: inversely converting the ciphertext data obtained in step 5 into a serial code; and
step 7: performing chaotic inverse mapping on the serial code obtained in step 6 to obtain a chaotic code,
wherein the chaotic code has an injective property and a diversified information encoding property, and is implemented according to self-similar indistinguishability of a period-3 period-doubling element; the serial code has a bijective property and a diversified information simulation property, and is implemented according to existence and uniqueness of a single-period element; and chaotic parameter modulation K of the chaotic code and random parameter modulation K of the serial code respectively have a semigroup property and a torus automorphism property.

2. The chaotic map-based digital chaotic encryption method of claim 1, **characterized in that** the discrete mapping is one-to-many forward and random discrete mapping, and contains a self-similar uncertain jumping discrete mapping property; the fuzzy mapping and the chaotic inverse mapping are one-to-one isomorphic mapping, and contain a self-similar indistinguishable fuzzy masking mapping property; and the coupled discrete mapping and chaotic mapping of the fuzzy mapping have a fully homomorphic discrete traversal random oracle injective property and a spreading code mapping property, and the chaotic inverse mapping has a fully homomorphic fuzzy masking black box masking injective property and a topological contractive mapping property, wherein the chaotic mapping constructed by the chaotic code 0000011111 and the serial code 0123456789 has a single-input single-output spreading code mapping property, and the chaotic inverse mapping has a single-input single-output topological contractive mapping property; and the chaotic mapping constructed by the chaotic code 0000011111 and the serial code 0000-1001 has a single-input multiple-output spreading code mapping property, and the chaotic inverse mapping has a multiple-input single-output topological contractive mapping property, wherein an isolation portion 0101010101 in the serial code is essentially a chaotic code, i.e., having an injective property.

3. A chaotic map-based digital chaotic encryption method, **characterized by** comprising the following steps:
step 1: sending a plaintext sequence to be encoded, and converting the block plaintext into a binary array code;
step 2: performing discrete mapping on the binary array code obtained in step 1 to obtain a chaotic code;
step 3: performing, by using a round key stream parameter K, fuzzy mapping on the chaotic code obtained in step 2 to obtain a serial code;
step 4: constructing a ciphertext sequence by using the serial code obtained in step 3; 0
step 5: transmitting the block ciphertext obtained in step 4 to a receiving party via a public channel;
step 6: inversely converting the block ciphertext obtained in step 5 into a serial code; and
step 7: performing chaotic inverse mapping on the serial code obtained in step 6 to obtain a chaotic code,
wherein the block ciphertext is capable of implementing information disguising with a black box simulation property by using a graft encoding component.

4. A chaotic map-based digital chaotic encryption method, **characterized by** comprising the following steps:
step 1: sending a block plaintext to be encoded, and converting the block plaintext into a binary array code;
step 2: performing chaotic inverse mapping on the binary array code obtained in step 1 to obtain a chaotic code;
step 3: performing, by using a single key parameter K or a round key parameter K, cyclically iterative chaotic inverse mapping on the chaotic code obtained in step 2 in a unit of 4 groups to obtain a chaotic code;
step 4: constructing a message digest by using the chaotic code obtained in step 3; and
step 5: transmitting the message digest obtained in step 4 and a message to a receiving party via a public channel.

5. A chaotic map-based digital chaotic encryption method, **characterized by** comprising the following steps:
step 1: sending a block plaintext to be encoded, and converting the block plaintext into a binary array code;
step 2: performing discrete mapping on the binary array code obtained in step 1 to obtain a chaotic code;
step 3: performing, by using an open-loop controlled or closed-loop controlled key parameter K, fuzzy mapping on the chaotic code obtained in step 2 to obtain a serial code;
step 4: constructing a block ciphertext by using the serial code obtained in step 3;
step 5: transmitting the block ciphertext obtained in step 4 to a receiving party via a public channel;
step 6: inversely converting the block ciphertext obtained in step 5 into a serial code; and
step 7: performing chaotic inverse mapping on the serial code obtained in step 6 to obtain a chaotic code,
wherein the key parameter K has a property of a block-by-block single key parameter generated under the drive of a character-by-character key stream parameter; wherein the closed-loop controlled key parameter K is capable of implementing, by using unassociated transfer subkeys K1, K2, K3,..., data-lossless key transfer compression and key escrow functions by means of at least three rounds of forward iterative encryption for an encryption key, the transfer subkeys K1, K2 and K3 are constructed by using true random numbers or calculated by means of multiple rounds of inversely iterative Hash function operations using an original key K, and the key transfer compression and key escrow methods can be independently used; and wherein the block ciphertext is capable of implementing information disguising with a black box simulation property by using a graft encoding component.

6. The chaotic map-based digital chaotic encryption method of claim 5, **characterized in that** the graft encoding component uses an intermittent audio and segment of a Morse code.

7. The chaotic map-based digital chaotic encryption method of claim 6, **characterized in that** the intermittent audio and segment of the Morse code are specifically as follows: no sound represents nonexistence, i.e., ○ and 0, and a sound represents existence, i.e., ● and 1, and the intermittent audio and segment of the Morse code are designed based on a geometrical theorem that two points of a dot dash line in long and short sounds determine a line, and a line in the graft encoding component represents 2; and a symbol grafting method is as follows: an encoding ciphertext rule is that a 0, 1 graft encoding component is an independent code, and a 2-9 graft encoding component is a grafting code, i.e., characters are randomly grafted by using the same horizontal/vertical/diagonal line; and an encoding key rule of the graft encoding component refers to encoding segment sequence identification and encoding direction arrow identification rules, which specifically follow an identification process of writing a sequence number in front of an arrow head and leaving a space at a connection between arrows.

8. The chaotic map-based digital chaotic encryption method of any one of claims 5-7, **characterized in that** the key escrow method comprises a key component 1 and a key component 2, the key component 1 referring to a seed key K3 of a user group and a single group of key data of a keyed Hash function, wherein a Hash key is used for key escrow, the seed key K3 is used for key recovery, and further, in order to facilitate the key escrow management of the user group, unified seed key K3 and Hash key are used, i.e., both the seed key and the Hash key are fixed values and are managed by an escrow agency 1; and the key component 2 referring to subkey ciphertexts C1, C2, and C3 generated by means of three rounds of forward iteration encryption using an original key K of a user in transfer subkeys K1, K2, and K3, wherein K1 and K2, and C1, C2, and C3 vary according to variation of the user original key K, i.e., the latter three are all dynamic values and managed by an escrow agency 2.

9. A chaotic map-based digital chaotic encryption method, **characterized by** comprising the following steps:
step 1: sending, by a receiving end decryptor, a block plaintext to be encoded, and converting the block plaintext into a binary array code, i.e., a polynomial semi-ciphertext;
step 2: performing discrete mapping on the binary array code obtained in step 1 to obtain a chaotic code;
step 3: performing, by using an open-loop controlled or closed-loop controlled single private key K_{B}, fuzzy mapping on the chaotic code obtained in step 2 to obtain a serial code;
step 4: constructing a block ciphertext, i.e., a polynomial ciphertext, by using the serial code obtained in step 3;
step 5: transmitting the block ciphertext obtained in step 4 to a sending end encryptor of a receiving party via a secret channel;
step 6: sending, by the sending end encryptor, a block plaintext to be encoded, and converting the block plaintext into a binary array code;
step 7: performing discrete mapping on the binary array code obtained in step 6 to obtain a chaotic code;
step 8: performing, by using a public round key K_{A}, fuzzy mapping on the chaotic code obtained in step 7 to obtain a serial code;
step 9: constructing a block ciphertext by using the serial code obtained in step 8;
step 10: transmitting the block ciphertext obtained in step 9 to a receiving end decryptor of the receiving party via a public channel;
step 11: inversely converting the block ciphertext obtained in step 10 into a serial code; and
step 12: performing chaotic inverse mapping on the serial code obtained in step 11 to obtain a chaotic code.

10. A chaotic map-based digital chaotic encryption method, **characterized by** comprising the following steps:
step 1: sending a block plaintext to be encoded, i.e., watermark data, and converting the block plaintext into a binary array code;
step 2: performing discrete mapping on the binary array code obtained in step 1 to obtain a chaotic code;
step 3: performing, by using a closed-loop controlled key stream parameter K, fuzzy mapping on the chaotic code obtained in step 2 to obtain a serial code;
step 4: constructing host data loaded with a watermark by using the serial code obtained in step 3;
step 5: solidifying the host data loaded with the watermark obtained in step 4 into a digital work;
step 6: inversely converting the host data loaded with the watermark obtained in step 5 into a serial code; and
step 7: performing chaotic inverse mapping on the serial code obtained in step 6 to obtain a chaotic code.
